# EUROPÄISCHE PATENTANMELDUNG

(11) **EP 2 858 190 A2**
(43) Veröffentlichungstag der Anmeldung: **08.04.2015**
(21) Anmeldenummer: 14003338.2
(22) Anmeldetag: 27.09.2014
(51) Int. Cl.: H02G 3/06, H02G 3/08, H02G 3/22

(54) **Vorrichtung zur Befestigung einer Leitung, Werkzeug, Grundkörper**

(30) Priorität: 01.10.2013 DE 102013016218
(71) Anmelder: Jacob GmbH, 71394 Kernen (DE)
(72) Erfinder: Sohn, Wolfgang, 71549 Auenwald (DE)
(74) Vertreter: Jendricke, Susann

(57) **Zusammenfassung**

Die Erfindung befasst sich mit einer Vorrichtung zur Befestigung einer Leitung (1) mit einem Grundkörper (2), einer Hutmutter (3), einer Klemmeinrichtung (4), wobei die Klemmeinrichtung (4) dem Grundkörper (2) zugeordnet ist und im Betriebszustand von der Hutmutter (3) übergriffen ist, wobei die Hutmutter (3) mit dem Grundkörper (2) eine lösbare Verbindung ausbildet und dabei auf die Klemmeinrichtung (4) derart einwirkt, dass die elektrische Leitung (1) gehalten ist und wobei der Grundkörper (2) mindestens eine zur Längsachse (A) der elektrischen Leitung (1) abgewinkelte, insbesondere radiale, Druckausgleichsöffnung (12) aufweist, die mit einem Filter (11) verschlossen ist, die sich dadurch kostengünstig herstellen lässt, dass der Filter (11) die Druckausgleichsöffnung (12) an der Innenoberfläche des Grundkörpers (2) verschließt und mit dieser in Kontakt ist.

Ferner soll ein Werkzeug angegeben werden, das eine bevorzugte Ausführungsform der erfindungsgemäßen Vorrichtung realisiert, sowie zwei verschiedene Grundkörper, die den Druckausgleich realisieren und als Auswahlbauteil mit den übrigen Bauteilen der Vorrichtung kombinierbar sind.

## Beschreibung

Die Erfindung betrifft eine Vorrichtung zur Befestigung einer Leitung mit einem Grundkörper, einer Hutmutter, einer Klemmeinrichtung, wobei die Klemmeinrichtung dem Grundkörper zugeordnet ist und im Betriebszustand von der Hutmutter übergriffen ist, wobei die Hutmutter mit dem Grundkörper eine lösbare Verbindung ausbildet und dabei auf die Klemmeinrichtung derart einwirkt, dass die Leitung gehalten ist und wobei der Grundkörper mindestens eine zur Längsachse der Leitung abgewinkelte, insbesondere radiale, Druckausgleichsöffnung aufweist, die mit einem Filter verschlossen ist. Die Erfindung betrifft ferner ein Werkzeug, das dazu dient eine bevorzugte Ausführungsform der Vorrichtung herzustellen, und zwei verschiedene Grundkörpertypen, die den Druckausgleich realisieren und mit den übrigen Bauteilen der Vorrichtung kombinierbar sind.

Leitungen können schlauchförmig sein und zum Stofftransport dienen oder sie können elektrische Kabel enthalten. Elektrische Leitungen mit diversen Kabeln werden an elektrische Geräte und Einrichtungen, wie Maschinen und Schaltschränke, angeschlossen. Auch Schlauchleitungen sollen in der Regel an Wandöffnungen von Behältern oder an Öffnungen von Anschlüssen oder auch in Verbindungseinrichtungen festgelegt werden. Die Vorrichtungen, die die Leitungen befestigen, werden üblicherweise als Kabelverschraubung oder Schlauchverschraubung bezeichnet. Sie dienen dazu, die Leitung zu halten und gegen Zugkräfte zu sichern bzw. die Leitung zu entlasten. Dazu wird eine Klemmwirkung auf die Leitung ausgeübt und eine Befestigung der Vorrichtung in der Wandöffnung realisiert. Zusätzlich kann auch eine Dichtung vorgesehen sein, die die Leitung gegen Feuchtigkeit und Staub abdichten.

Eine Vorrichtung mit den oben angegebenen Merkmalen ergibt sich aus der Druckschrift DE 10 2011 100 499 B4 aus dem Bereich Solartechnik / Photovoltaik. Dort geht es um einen Leitungsverbinder, der zwei Kabelverschraubungen umfasst, in denen die beiden zu verbindenden elektrischen Leitungen gehalten werden und zwar unter Gewährleistung des Berührungsschutzes. Der Leitungsverbinder umfasst ein Gehäuse, innerhalb dessen die Enden der zu verbindenden Kabel aufeinandertreffen. Eine der Kabelverschraubungen weist eine sich radial durch deren Grundkörper erstreckende Druckausgleichsöffnung auf, die mit einem Filter verschlossen ist. Der Leitungsverbinder kommt im Freien zum Einsatz, wo die Witterung, Luftfeuchte, Regen, Nachttemperaturen, Taupunkt eine große Rolle spielen. Der Druckausgleich zwischen dem Innenraum des Gehäuses des bekannten Leitungsverbinders und der Umgebung ist erforderlich, um die Kondensation von Luftfeuchtigkeit in dem Gehäuse zu vermeiden. Der bekannte Filter umfasst eine semipermeable Membran, weist eine stopfenförmige Ausgestaltung einer beträchtlichen Baugröße auf und wird von außen in die Druckausgleichsöffnung des Grundkörpers eingesetzt. Allein die Baugröße des Filters verbietet die Zuordnung zu einer handelsüblichen Kabelverschraubung. Wie und wann die Befestigung des Filters in der Öffnung erfolgt, ist nicht beschrieben, kann aber nur aufwendig sein.

Der Niederschlag, der Tau oder das Kondenswasser wird bei Unterschreitung des Taupunktes von wärmerer und wasserdampfgesättigter Luft oder von Gasen verursacht, die im kühleren Zustand weniger Wasser aufnehmen können.

Die vorliegende Erfindung hat ihr Anwendungsgebiet im Zusammenhang mit der Montage der elektrischen Leitung in der Wandöffnung eines Schaltschrankes, Verteilerkastens oder eines Maschinengehäuses. Werden Anschluss-, Schalt- und Verteilerkästen in Außenanlagen oder Räumen mit Temperaturgefällen verbaut, bildet sich Feuchtigkeit, welche sich als Kondenswasser im Gehäuse niederschlägt. Oft sind Maschinengehäuse luftdicht verschlossen. Anstatt mit Trockenmitteln zu arbeiten, ist es in der Branche üblich mit Kabelverschraubungen zu arbeiten, die einen Druckausgleich zur Umgebung ermöglichen ohne Feuchtigkeit in das Gehäuseinnere zu lassen. Feuchtigkeit innerhalb von Gehäusen, gerade in Verbindung mit elektrischem Strom oder auch indirekt über in den Gehäusen integrierte Elektronik, kann zu Kurzschlüssen, Kriechströmen, Spannungsüberschlägen durch Verkürzung von Luft- und Kriechstrecken führen. Außerdem kann Feuchtigkeit im Maschinengehäuse, Schaltschrank oder Verteilerkasten die Zerstörung von nicht gegen Feuchtigkeit geschützten Teilen, wie z.B. bestückte, nicht lackierte oder vergossene Leiterplatten, Kondensatoren, Wicklungen etc., verursachen.

Mit dem Thema Druckausgleich zur Vermeidung von Kondenswasser im Maschinengehäuse, Verteilerkasten, Schaltschrank oder dergleichen befassen sich noch weitere Druckschriften.

Die Druckschrift DE 10 2009 023 646 A1 zeigt eine Kabel-/Schlauchverschraubung mit einem Stutzen und einem Filterelement im Inneren des Stutzens. Der Stutzen umfasst eine Klemmeinrichtung mit Klemmlamellen, die in axialer Richtung zur Kabelachse durch Längsschlitze voneinander beabstandet sind. Die axialen Längsschlitze stellen außerhalb des Bereichs der Hutmutter eine Verbindung zur Umgebung her. Das Filterelement ist ein Ringkörper, im Bereich der Klemmeinrichtung angeordnet ist und der den Innenraum des Stutzens gegen das Eindringen von Feuchte abdichtet, den Luftaustausch mit der Umgebung aber zulässt. Nachteilig an dieser Ausführung ist, dass herkömmliche Klemmlamellen verlängert werden müssen, damit die Längsschlitze bis zur Hutmutter reichen, die die Klemmfunktion der Klemmeinrichtung aktiviert. Hierdurch wird die Festigkeit der Lamellen reduziert und somit ein negativer Einfluss auf die Festigkeit der Konstruktion verursacht. Außerdem legt sich die in Rede stehende bekannte Verschraubung auf ein ringförmiges Filterelement fest, das als Zusatzbauteil mitmontiert werden muss und die Verwendung einer dünnen Membran ausschließt. Die Spezialanfertigung der verlängerten Klemmlamellen verhindert die Verwendung standardisierter Bauteile von Kabelverschraubungen.

Aus der Druckschrift DE 20 2005 011 301 U1 ist eine Kabelverschraubung mit einem Membranventil vorbekannt, deren Stutzen entlang einer senkrecht zur Kabelachse verlaufenden Trennebene im Bereich des Befestigungssechskants zweigeteilt ist. Die Stutzenteile sind so ausgebildet, dass sie Luftkanäle zwischen dem Außenbereich und dem Innenbereich der Kabelverschraubung bilden und der Aufnahme eines zylinderringförmigen Filterelementes oder einer Membran dienen. Die in Rede stehende Kabelverschraubung ist sehr aufwendig gestaltet und hat zudem den Nachteil, durch die Teilung des Stutzens an Festigkeit zu verlieren und an Bauhöhe und -breite zuzunehmen.

Aus den Druckschriften DE 10 2005 035 210 A1, DE 10 2006 034 224 B3, DE 10 2006 062 690 A1 und DE 10 2007 001 584 A1 sind Kabelverschraubungen bekannt, die ebenfalls geteilte Stutzen und innenliegende Luftkanäle, wie in der Druckschrift DE 20 2005 011 301 U1 beschrieben, aufweisen. Dabei sind die Luftkanäle dort ausladender gestaltet und in den Gehäuseraum hineingeführt. Wie bei der Kabelverschraubung gemäß DE 20 2005 011 301 ist dort nachteilig, dass die Kabelverschraubungen sehr aufwendig gestaltet sind, durch die Teilung des Stutzens an Festigkeit verlieren und an Bauhöhe und -breite zunehmen. Darüber hinaus muss auch noch die Wandöffnung im Maschinengehäuse, im Schaltschrank oder Verteilerkasten größer gestaltet sein.

Aus der Druckschrift DE 10 2011 089 961 A1 ist eine Kabelverschraubung bekannt, die neben den üblichen Merkmalen - Stutzen, Klemmkorb, Hutmutter mit einem wasserundurchlässigen, aber gas- und dampfdiffusionsdurchlässigen Filterelement ausgestattet ist. Das zylindrische Filterelement ist zwischen zwei Dichtringen angeordnet, an denen das Filterelement im verschraubten Zustand der Kabelverschraubung dichtend anliegt.

Der Außenumfang des Filterelements ist beabstandet zur Innenwandung des Stutzens, so dass sich zwischen Stutzen und Filterelement ein Hohlraum bildet. Eine radiale Bohrung im Stutzen verbindet den Hohlraum mit der Umgebung. Ein Nachteil dieser Erfindung ist, dass zwischen Filterelement und Kabelstutzen noch ein zusätzlicher Dichtring notwendig ist. Dies ist durch die Konstruktion mit dem Hohlraum zwischen Filterelement und Kabelstutzen bedingt. Zudem ist bei der in Rede stehenden Kabelverschraubung die Verwendung einer kostengünstigen Membran ausgeschlossen.

Die Druckschrift DE 10 2010 026 308 A1 zeigt ein Elastomer-Membranventil für den Druckausgleich im Zusammenhang mit der Einführung eines Kabels in ein Gehäuse. Der Stutzen der Kabeleinführung ist zwischen Gewindesechskant und Gewindeteil zweigeteilt. Zwischen den beiden Teilen ist die Membran befestigt, die die Stutzenöffnung überspannt und die mit einer Öffnung versehen ist, die kleiner ist als der Querschnitt der durchzuführenden Leitung. Bei der Leitungsmontage wird die Membran aufgeweitet und schmiegt sich an den Gegenstand an, bildet somit eine Dichtung. Die Membran selber ist aus einem semipermeablen Werkstoff, so dass diese gas- aber nicht flüssigkeitsdurchlässig ist. Das Elastomer-Membranventil bildet zusammen mit der Kabeleinführung keine Kabelverschraubung aus. Der Nachteil dieser Ausführung ist, dass dieses Ventil weder zugentlastende Funktion hat noch die Möglichkeit bietet, für geschirmte Kabel eine Schirmableitung zu integrieren.

Eine flüssigkeitsdichte und atmungsaktive Kabelverschraubung zur Montage von Leitungen in Wandöffnungen ist aus der Druckschrift DE 10 2009 059 211 A1 bekannt. Die Kabelverschraubung weist neben grundsätzlichen Bauteilen, wie Stutzen (Doppelnippel), Hutmutter (Druckschraube) und Dichteinsatz, auch ein Membranventil auf, das zwischen Gehäusewand und einem Kragen am Stutzen angeordnet ist und einerseits mit der Außenatmosphäre und andererseits über einen zwischen zweitem Endbereich des Doppelnippels und der Lochlaibung der Lochung gebildeten Spalt mit dem Innenraum der Kabelverschraubung in Verbindung steht. Diese Kabelverschraubung folgt den bekannten Lösungen aus den vorgenannten Druckschriften DE 10 2005 035 210 A1, DE 10 2006 034 224 B3 und DE 20 2005 011 301 U1, bei denen der Filter aus einem unterlegscheibenförmigen Filterelement gebildet ist und der Luftkanal außen radial ausgebildet ist und im Inneren der Kabelverschraubung dann axial umlaufend weitergeführt wird. Demgegenüber sieht die Kabelverschraubung gemäß DE 10 2009 059 211 A1 vor, dass der Stutzen aus einem Teil ausgebildet ist. Im Inneren der Kabelverschraubung sind neben der Membran bzw. dem unterlegscheibenförmigen Filterelement aber noch zwei zusätzliche Elemente notwendig, um den Luftkanal und Haltemöglichkeiten für Membran / Filterelement zu bieten. Somit erweist sich die in Rede stehende Kabelverschraubung als sehr aufwendig.

Dem eingangs beschriebenen Stand der Technik ist zu entnehmen, dass sich über die dortigen Vorrichtungen Befestigungsvorrichtungen für elektrische Leitungen in Wandöffnungen ergeben, die Baugröße erweiternde Kanäle realisieren, die trotz platzsparender Radialbohrung im Stutzen auf zylindrische Filterelemente festgelegt sind und Membranen ausschließen. Weiter ergibt sich aus dem Stand der Technik ein Kabelverbinder, wobei eine Radialbohrung im Stutzen bekannt ist und auch die Verwendung einer Membran nicht ausgeschlossen ist, jedoch das Membranbauteil zu komplizierten aufwendigen Verbindungstechniken mit dem Stutzen führt und somit von der Verwendung von Standardverschraubungen wegführt.

Ausgehend vom Stand der Technik gemäß DE 10 2011 100 499 B4 liegt der Erfindung die Aufgabe zugrunde, eine Vorrichtung der in Rede stehenden Art mit Druckausgleichsfunktion anzugeben, die sich kostengünstig herstellen lässt. Ferner soll ein Werkzeug angegeben werden, das eine bevorzugte Ausführungsform der erfindungsgemäßen Vorrichtung realisiert, sowie zwei verschiedene Grundkörper, die den Druckausgleich realisieren und mit den übrigen Bauteilen der Vorrichtung kombinierbar sind.

Die voranstehende Aufgabe wird durch die Merkmale des Patentanspruches 1 gelöst. Danach ist eine Vorrichtung der in Rede stehenden Art derart ausgestaltet, dass der Filter die Druckausgleichsöffnung an der Innenoberfläche des Grundkörpers verschließt und mit dieser in Kontakt ist

Ausgehend vom Stand der Technik ist zunächst erkannt worden, dass dort stets Sonderanfertigungen der relevanten Einzelteile der Vorrichtung erforderlich sind. Beispielsweise ändert sich der Grundkörper eklatant durch die zu realisierenden Strömungsverbindungen oder der Klemmkörper wird durch einen Dichtkörper mit Filterabschnitt ersetzt oder die Baugröße der Vorrichtung vergrößert sich oder Filterelemente erfordern spezielle Befestigungsmittel am Grundkörper.

Weiter ist erkannt worden, dass Kosten gespart werden können, wenn den Dimensionen einer Standard-Vorrichtung, umgangssprachlich als "Kabelverschraubung" bezeichnet, im Hinblick auf die Baugröße und das Einbaumaß der Kabelverschraubung im Verhältnis zu den Leitungsdurchmessern entsprochen werden und weitgehend auf standardisierte, übliche Einzelbauteile der Vorrichtung zurückgegriffen werden kann.

Erfindungsgemäß ist schließlich erkannt worden, dass übliche Bauteile in den Dimensionen einer Standard-Kabelverschraubung innerhalb der erfindungsgemäßen Vorrichtung verwendet werden können, wenn der Filter an der Innenoberfläche des Grundkörpers angeordnet und mit dieser in Kontakt ist.

Auf diese Weise ist es nur noch nötig, den Grundkörper einer herkömmlichen Kabelverschraubung mit einer Öffnung zu versehen, die sich vorzugsweise radial oder aber auch abgewinkelt zur Längsachse der montierten Leitung erstreckt und innen - vor die Öffnung - den Filter zu installieren.

Die Strömungsverbindung zum Innenraum des Gehäuses des Schaltschrankes, des Verteilerkastens oder des Schaltschrankes ist durch das offene Ende des Grundkörpers gegeben. Die Leitung, die sich in der Durchgangsöffnung des Grundkörpers erstreckt, kann jedenfalls den Gasaustausch nicht unterbinden. Nur der Filter sorgt dafür, dass keine Feuchte, keine Feststoffe, transportiert werden, sondern nur ein Gas- und Temperaturaustausch stattfindet.

Die voranstehende Aufgabe wird im Hinblick auf das Werkzeug durch die Merkmale des Patentanspruches 14 gelöst. Das Werkzeug bezieht sich auf die Herstellung einer stoffschlüssigen Verbindung zwischen dem Filter und dem Grundkörper im Bereich der Druckausgleichsöffnung. Das Werkzeug umfasst eine Aufnahme zur Positionierung und Fixierung des Grundkörpers und eine Trageinrichtung, welche den Filter so positioniert, dass der Stoffschluss mit dessen Innenoberfläche im Bereich der Druckausgleichsöffnung, insbesondere durch Klebung, stattfindet. Erfindungsgemäß ermöglichen diese Grundeigenschaften des Werkzeuges den Zugang zur Innenoberfläche des Grundkörpers, dessen Sichtverhältnisse und Zugänglichkeit eingeschränkt sind.

Die voranstehende Aufgabe wird im Hinblick auf die zwei verschiedenen, für den gefilterten Druckausgleich geeigneten Grundkörpertypen durch die Merkmale der Patentansprüche 16 und 17 gelöst. Dort sind Grundkörper beansprucht, die mit Filtern - einerseits kraft- und/oder formschlüssig, andererseits stoffschlüssig - konfektioniert sind. Diesbezüglich ist erfindungsgemäß erkannt worden, dass die mit den Filtern ausgestatteten Grundkörper als Einzelbauteile mit den übrigen Bestandteilen herkömmlicher Vorrichtungen zur Befestigung elektrischer Leitungen, auch mit "Kabelverschraubung" bezeichnet, je nach Bedarf verbaut werden können. Der Monteur kann also einfache Grundkörper, auch mit "Stutzen" oder "Doppelnippel" bezeichnet, neben den für den gefilterten Druckausgleich geeigneten Grundkörpern vorhalten und je nach Erfordernis einsetzen. Dabei kann er entscheiden, welche Art von Filter - Membran oder Filterelement - er bevorzugt.

Gerade in der Montagesituation liegt der Vorteil von standardisierten Grundkörpern mit Druckausgleichvorkehrungen gängiger Baugrößen auf der Hand. Der Monteur kann die Wandöffnung erstellen und sich dann entscheiden, welchen Grundkörper er in der Vorrichtung verbaut. Die Wandöffnung wird nie zu groß oder zu klein sein, sowohl für eine normale einfache Vorrichtung ohne Druckausgleichsvorkehrungen wie auch für die erfindungsgemäße Vorrichtung. Durch das Vorhalten verschiedener Grundkörper mit oder ohne Druckausgleichsfunktion kann der Monteur vor Ort entscheiden, welche Art der Leitungsbefestigung erforderlich ist.

Die Druckausgleichsöffnung könnte an jeder beliebigen Stelle des Grundkörpers angebracht werden. Standardisierte Grundkörper weisen an der Außenoberfläche verschiedene Gestaltungen auf. Häufig ist ein Außensechskant vorgesehen und zumindest ein Gewindeabschnitt, auf den die Hutmutter aufgeschraubt wird. Zwischen dem Gewindeabschnitt und dem Außensechskant könnte aus fertigungstechnischen Gründen ein Abstand gelassen sein. Die Druckausgleichsöffnung könnte durch den Außensechskant des Grundkörpers gebohrt sein. Da der Außensechskant zumeist sehr schmal ist, wird die Bohrung hier eher radial ausgeführt. Alternativ oder zusätzlich könnte die Druckausgleichsöffnung aber auch abgewinkelt, insbesondere radial, durch den Gewindeabschnitt für die Hutmutter gebohrt sein. Zudem kann auch der Abstand zwischen Außensechskant und Gewindeabschnitt Sitz der Druckausgleichsöffnung sein. Auch mehrere Grundkörperanschnitte durchgreifende Druckausgleichsöffnungen sind möglich.

Von besonderem Vorteil ist es, die Druckausgleichsöffnung radial durch den Außensechskant des Grundkörpers zu führen. Es hat sich im Hinblick auf einen homogenen und effektiven Druckausgleich außerdem als vorteilhaft erwiesen, mehrere, insbesondere drei bis sechs, Druckausgleichsöffnungen, vorzusehen. Diese könnten alle im Außensechskant gebohrt sein. Es ist aber auch möglich, die Druckausgleichsöffnungen an verschiedenen Abschnitten des Grundkörpers vorzusehen, insbesondere dann, wenn der Filter als Membranelement ausgebildet ist. Auch Grundkörper einer Kabelverschraubung, die keinen Außensechskant aufweisen, können mit der entsprechenden abgewinkelten, insbesondere radialen, Druckausgleichsöffnung versehen sein.

Herkömmliche Grundkörper sind starre hohlzylindrische Bauteile, die dazu dienen, die Hutmutter und die Klemmeinrichtung aufzunehmen. Bei EMV-Verschraubungen können sie auch eine den Strom leitende Funktion ausüben. Nach einer Weiterbildung der Erfindung könnten bei Grundkörpern, die bereits mit einer Klemmeinrichtung zu einem einzigen Bauteil kombiniert sind, die Druckausgleichsöffnungen ausschließlich am starren, hohlzylindrischen Abschnitt angeordnet sein, aber keinesfalls an dem Abschnitt, der die Klemmfunktion ausübt.

Der Filter könnte als hohlzylinderförmiges Filterelement ausgebildet sein, das form- und / oder kraftschlüssig mit der der Innenoberfläche des Grundkörpers in Verbindung gebracht ist. Die Verschlussfläche des Filters erstreckt sich dabei koaxial zur Längsachse der Leitung. Ein hohlzylinderförmiges Filterelement kann mehrere Druckausgleichsöffnungen überdecken und könnte dazu in seiner Außengeometrie auf die Innengeometrie des Grundkörpers abgestimmt sein. Als Materialien hierfür kommen beispielsweise poröses Niederdruck-Polyethylen, das im Sinterverfahren hergestellt wurde, oder Keramik (bspw. Al₂O₃) in Betracht.

Wenn das Filterelement verformbare Materialeigenschaften hat, könnte es einen etwas größeren Außenquerschnitt aufweisen als der Innenquerschnitt des Grundkörpers im Bereich der Druckausgleichsöffnung, so dass das Filterelement gegen die Druckausgleichsöffnung gepresst ist. Je nach Weichheit des Filtermaterials könnte es auch dazu kommen, dass während des Einpressens ein wenig Material des Filterelementes in die Druckausgleichsöffnung hineinragt. Bei dieser Ausführung wird ein reiner Kraftschluss realisiert. Bei verschiedenen Grundkörpern existiert eine koaxiale Ringnut an der Innenoberfläche des Grundkörpers, insbesondere im Bereich des Außensechskants. Ist dies der Fall, könnte die Druckausgleichsöffnung dort münden. Dann könnte das hohlzylindrische Filterelement auf die Abmessungen der Ringnut abgestimmt und in diese Ausnehmung eingepresst sein, so dass zusätzlich ein Formschluss vorliegt.

Bei Filterelementen, die weitgehend steif ausgebildet sind, ist es hilfreich, das Filterelement in Richtung der Längsachse der Leitung zu schlitzen, um eine Minimalflexibilität zu erzielen. Das montierte Filterelement drückt dann kraft Eigenspannung gegen die Innenoberfläche des Grundkörpers und verschließt dabei die Druckausgleichsöffnung. Um die Druckausgleichsöffnung wirksam zu verschließen, ist es bevorzugt, dass das Filterelement die Druckausgleichsöffnung vollständig überdeckt.

Nach einem weiteren Ausführungsbeispiel könnte das Filterelement mit mindestens einem Dichtelement konfektioniert sein. Vorzugsweise könnte das Filterelement an seinen Enden mit je einem Dichtelement ausgestattet sein. Eine einstückige Variante des Filterelements mit beidseitigen Dichtelementen wird als vorteilhaft im Hinblick auf die Handhabung angesehen. Eine Montage von Einzelteilen wäre hier zu aufwendig. Die zusätzlichen Dichtelemente sollen den Feuchteschutz unterstützt und haben auch noch eine weitere Funktion. Bei dem in Rede stehenden Ausführungsbeispiel soll eine formschlüssige Verbindung erzeugt werden. Einerseits könnte im Grundkörper eine Anlageschulter vorgesehen sein, andererseits könnte die Klemmeinrichtung einen Anschlag erzeugen. Das Filterelement könnte also in den Grundkörper eingelegt werden und sich an der Anlageschulter abstützen, danach folgt die Klemmeinrichtung und bildet quasi die Wegbegrenzung / axiale Verschiebesicherung. Da nun das eingelegte Filterelement noch ein beträchtliches Spiel zwischen Anlageschulter und Klemmelement, insbesondere dessen Verbindungsabschnitt, aufweisen könnte, könnte das Dichtelement zusätzlich zur Dichtfunktion auch die Funktion übernehmen, Spielfreiheit herzustellen.

Alternativ zu einem hohlzylinderförmigen Filterelement könnte der Filter auch als hohlzylindrische Membran ausgebildet sein. Auch hier gilt, dass diese hohlzylindrische Membran ebenfalls an der Innenoberfläche des Grundkörpers im Bereich des Außensechskantes angeordnet werden könnte. Da aber ein Kraftschluss wegen der geringen Materialstärke der Membran schwer realisierbar ist, könnte bei diesem Ausführungsbeispiel eine Verbindung per Stoffschluss in Betracht kommen. Dabei könne auf die Verwendung eines Klebstoffes zurückgegriffen werden. Denkbar sind aber - gerade bei Grundkörpern aus Kunststoff - auch Verbindungen zwischen Filter und Grundkörper, die durch Vulkanisieren oder Schweißen erhalten werden. Wie das hohlzylindrische Filterelement ist auch die hohlzylindrische Membran geeignet, mehrere Druckausgleichsöffnungen zu verschließen.

Ein weiteres Ausführungsbeispiel weicht von der Hohlzylinderform / Ringform der bisher diskutierten Filter ab. Gemäß diesem bevorzugten Ausführungsbeispiel könnte der Filter als Membranelement ausgebildet sein. Hier wird also abgewichen von einer Material verbrauchenden Verschlusslösung, in dem man sich rein auf den Verschluss der Druckausgleichsöffnung konzentriert und nur dort Material verwendet. Die Verschlussfläche des Membranelements erstreckt sich dabei koaxial zur Längsachse der Leitung.

Als Materialien für die Membrane - unabhängig davon, ob sie in Hohlzylinderform oder als Element verwendet werden - kämen beispielsweise dünne Filme aus Polyacrylnitrilharz mit 0,5 - 10%iger Sulfonsäuregruppen, auf einem porösen Film Polytetrafluorethylen (PTFE, Teflon) oder Polyolefinfilm aufgetragen in Betracht. Des Weiteren sind Polytetrafluorethylen (PTFE, Teflon) mit einem Hydrophilierungsmittel als Material für die Membran geeignet. Es könnte auch eine poröse Fluorpolymermembran eingesetzt werden, die mit wasserundurchlässigem Polyurethan beschichtet ist. Des Weiteren sind Polymer, Polypropylen (PP) oder expandiertes Polytetrafluorethylen (PTFE, Teflon), mit symmetrischer Porenstruktur hydrophoben Charakters einsetzbar. Als weitere Materialien für die Membrane könnte auch mikroporöses Material wie Polytetrafluorethylen (PTFE, Teflon) sowie eine dünne Folie aus PE, PP, PS, PTFE oder PES (Polyethersulfon), eingesetzt werden. Letzt genannte Stoffe sind meistens auf ein durchlässiges Trägermaterial zwecks besserer Verarbeitbarkeit aufgetragen.

Die Membranelemente sind in geometrischer Hinsicht natürlich auch auf die Druckausgleichsöffnung abgestimmt und müssen demzufolge eine größere Fläche aufweisen als die Druckausgleichsöffnung, um eine wirksamen Verschluss zu realisieren. Das Membranelement könnte vorzugsweise eine kreisrunde Formgebung und einen Durchmesser, der den der zumeist als Bohrung vorliegenden Druckausgleichsöffnung überschreitet, damit noch ein Befestigungsrand, insbesondere ein Kleberand, zur Verfügung steht.

Im Gegensatz zu der aus dem Stand der Technik bekannten einzigen Druckausgleichsöffnung am Grundkörper wird erfindungsgemäß vorgeschlagen, drei bis sechs Druckausgleichsöffnungen und drei bis sechs Membranelemente vorzusehen. Hier wird eine symmetrische Öffnungs- und Filteranordnung bevorzugt. Es wird ausdrücklich hervorgehoben, dass mehrere Druckausgleichsöffnungen nicht nur bei Membranelementen, sondern auch bei einer hohlzylindrischen Membran oder einem hohlzylinderförmigen Filterelement oder jedem sonst wie gearteten Filter vorgesehen sein können.

Sowohl die hohlzylindrische Membran als auch die Membranelemente könnte vorzugsweise an der Innenoberfläche des Grundkörpers unter Verschluss der Druckausgleichsöffnung angeklebt sein. Damit nun der Druckausgleich zwischen dem Inneren eines Maschinengehäuses, Verteilerkastens Schaltschranks und der Umgebung wirksam hergestellt werden kann, könnte der Grundkörper an der Innenoberfläche zum Maschinengehäuse etc. weisende Längsnuten aufweisen, die sich parallel zur Längsachse der Leitung erstrecken. Diese Längsnuten könnten eine ggf. vorhandene ringförmige Ausnehmung im Bereich des Außensechskants kreuzen und die Druckausgleichsöffnungen würden in den Längsnuten bzw. in der Ringnut münden.

Sinn und Zweck der zur Längsachse parallelen Längsnuten ist es einerseits, den mit Längsrippen bestückten Verbindungsabschnitt der Klemmeinrichtung zu führen. Bei den Ausführungsbeispielen, die sich mit Membranen befassen, wird es bevorzugt, eine Klemmeinrichtung mit einem etwas längeren Verbindungsabschnitt zu verwenden, so dass dieser im montierten Zustand über den Filter hinausreicht und so eine zusätzliche radiale Bewegungssicherung für den Membranfilter herstellt. Andererseits ergibt sich eine zuverlässige Strömungsverbindung durch den Abstand zwischen der Außenoberfläche des Verbindungsabschnittes und der Innenoberfläche des Grundkörpers zumindest im Bereich zwischen den Längsnuten, da die Bautiefe der Längsrippen der Klemmeinrichtung über die der Längsnuten des Grundkörpers hinausgeht und damit Luftkanäle für den Gasaustausch zwischen Maschinengehäuse etc. und Umgebung vorhanden sind.

Die erfindungsgemäße Vorrichtung könnte bei Kabelverbindern zum Einsatz kommen, wird aber bevorzugt dort eingesetzt, wo eine elektrische Leitung in einer Wandöffnung eines Maschinengehäuses oder Schaltschranks oder Verteilerkastens oder dergleichen zu befestigen ist.

Ein weiteres Anliegen der Erfindung richtet sich auf ein Werkzeug, das der Herstellung der stoffschlüssigen Verbindung zwischen dem Filter in Form einer hohlzylindrischen Membran oder in Form von Membranelementen und dem Grundkörper dient.

Je nachdem, wie das Werkzeug aufgebaut ist - als fixe Station oder als handhabbare Einheit -, könnte die Trageinrichtung parallel und/oder radial zur Längsachse des Grundkörpers bewegbar sein, um den Filter entsprechen zur Druckausgleichsöffnung an der Innenoberfläche des Grundkörpers zu bringen.

Bei einer hohlzylindrischen Membran könnte ein Spreizdorn ausreichen, auf dessen Spitze der mit einer Klebschicht an der Außenseite versehene Filter aufgesteckt ist. Der Spreizdorn könnte entlang der Längsachse in die Bohrung des positionierten Grundkörpers eingebracht werden. Angekommen im Bereich der relevanten Innenoberfläche des Grundkörpers, in die bspw. drei Druckausgleichsöffnungen vom Außensechskant her kommend münden, könnte dann durch Spreizung die radiale Bewegung realisiert werden, wobei der Filter verklebt wird.

Bei der Verklebung eines Membranelementes oder mehrerer Membranelemente könnte ein anderer Werkzeugaufbau vorgesehen sein. Dort könnte die Trageinrichtung über ein Backenfutter radial zur Längsachse des Grundkörpers bewegbar sein, während der Grundkörper an einer Aufnahme zur Filtermontage festgelegt wird. Bevor der Grundkörper über der Trageinrichtung positioniert wird, findet zunächst die Präparation des Membranelementes statt, das auf die Trageinrichtung aufgelegt wird. Bei der Montage von drei Membranelementen wird ein Dreibackenfutter eingesetzt, so dass gleichzeitig gearbeitet werden kann.

Sowohl bei der hohlzylindrischen Membran als auch bei dem Membranelement könnte die Trageinrichtung zur Sicherung des Filters vor dem Aufbringen auf den Grundkörper mit Unterdruck / Vakuum arbeiten, so dass der Filter solange angesaugt bleibt, bis der Klebvorgang einsetzt. Die Ausbildung der Verbindung kann einerseits durch eine radiale Andrückbewegung der Trageinrichtung, andererseits durch eine temporäre Überdruckbeaufschlagung ausgeführt oder unterstützt werden.

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 nachgeordneten Ansprüche, andererseits auf die nachfolgende Erläuterung von mehreren Ausführungsbeispielen der Erfindung anhand der Zeichnung zu verweisen. In Verbindung mit der Erläuterung der angeführten Ausführungsbeispiele der Erfindung werden auch im Allgemeinen bevorzugte Ausgestaltungen und Weiterbildungen der Lehre erläutert. In der Zeichnung zeigen
- Fig. 1: in schematischer, perspektivischer Explosionsdarstellung die erfindungsgemäße Vorrichtung gemäß einem ersten Ausführungsbeispiel vor der Montage einer elektrischen Leitung,
- Fig. 2: in skizzenhafter Darstellung, einen Längsschnitt durch einen Teilbereich des Grundkörpers gemäß Fig. 1, umfassend den Außensechskant, mit montiertem Filter,
- Fig. 3: in schematischer, perspektivischer Explosionsdarstellung die erfindungsgemäße Vorrichtung gemäß einem zweiten Ausführungsbeispiel vor der Montage einer elektrischen Leitung,
- Fig. 4: in skizzenhafter Darstellung, einen Längsschnitt durch einen Teilbereich des Grundkörpers gemäß Fig. 3, umfassend den Außensechskant, mit montiertem Filter,
- Fig. 5: in schematischer, perspektivischer Explosionsdarstellung die erfindungsgemäße Vorrichtung gemäß einem dritten Ausführungsbeispiel vor der Montage einer elektrischen Leitung,
- Fig. 6: in skizzenhafter Darstellung, einen Längsschnitt durch einen Teilbereich des Grundkörpers gemäß Fig. 5, umfassend den Außensechskant, mit montiertem Filter,
- Fig. 7: in schematischer, perspektivischer Explosionsdarstellung die erfindungsgemäße Vorrichtung gemäß einem vierten Ausführungsbeispiel vor der Montage einer elektrischen Leitung,
- Fig. 8: in skizzenhafter Darstellung, einen Längsschnitt durch einen Teilbereich des Grundkörpers gemäß Fig. 7, umfassend den Außensechskant, mit montiertem Filter und montierter Klemmeinrichtung und
- Fig. 9: in schematischer, längsgeschnittener Darstellung, ein Werkzeug zur Montage des Filters in Form von Membranelementen gemäß dem vierten Ausführungsbeispiel.

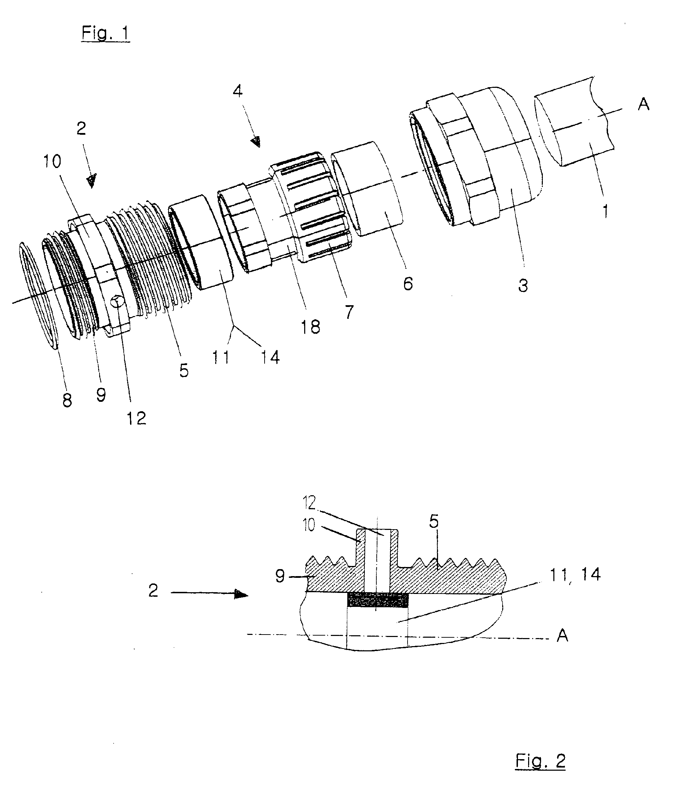

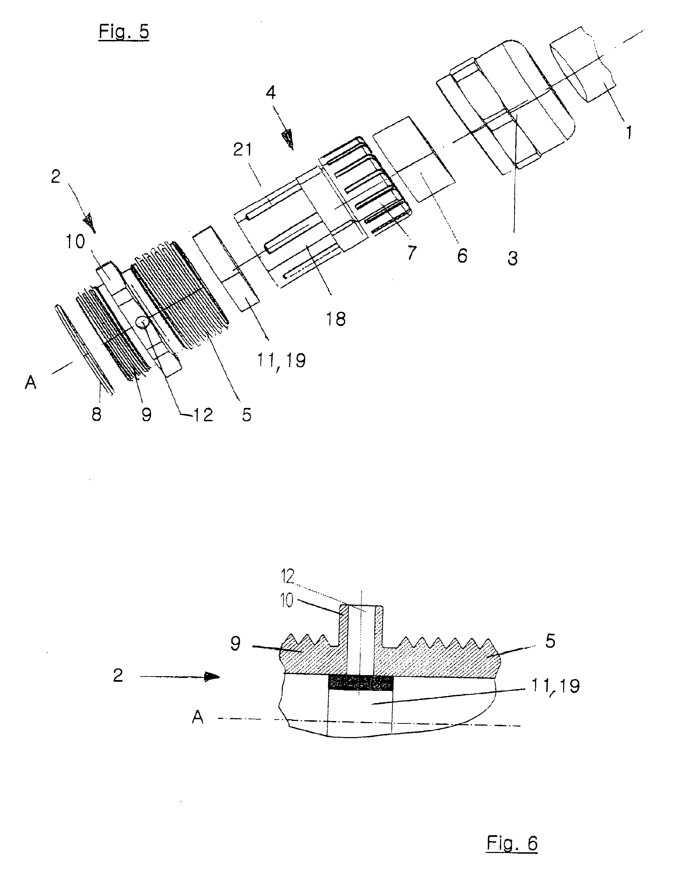

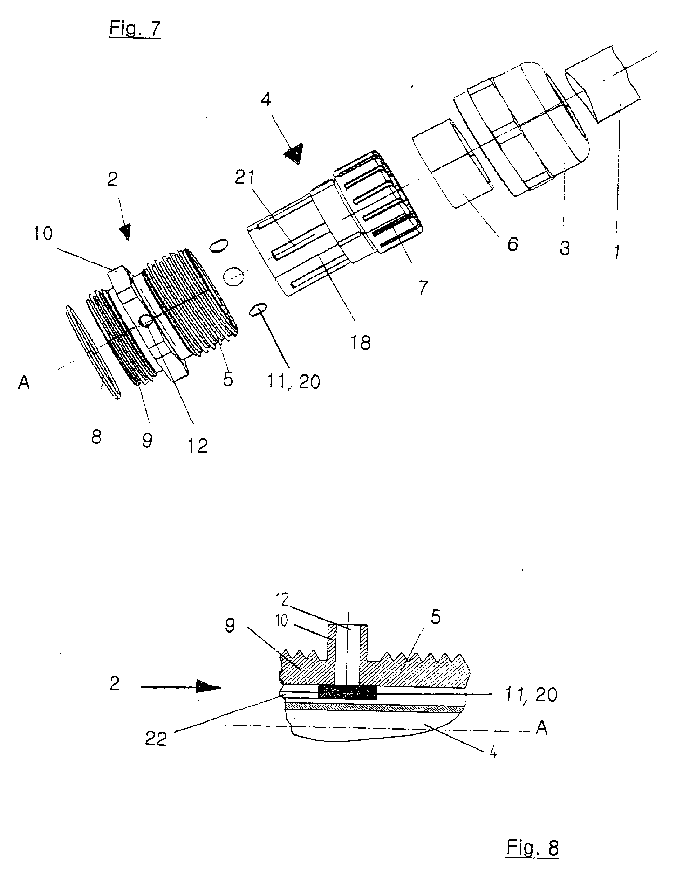

Die Fig. 1, 3, 5, 7 zeigen eine Vorrichtung zur Befestigung einer elektrischen Leitung 1 mit einem Grundkörper 2, einer Hutmutter 3, einer Klemmeinrichtung 4. Im montierten Zustand ist die Klemmeinrichtung 4 in den Grundkörper 2 eingeführt und die Hutmutter 3 ist auf den Gewindeabschnitt 5 des Grundkörpers 2 aufgeschraubt. Dabei wirkt die Hutmutter 3 auf die Klemmeinrichtung 4 derart ein, dass die sich dann durch den Grundkörper 2 hindurch erstreckende elektrische Leitung 1 gehalten ist. Zur Vorrichtung gehören noch das Dichtelement 6, das in den Lamellenabschnitt 7 der Klemmeinrichtung 4 eingesetzt wird und die Leitung 1 abdichtet und der O-Ring 8 am Ende des Grundkörpers 1.

Die hier beschriebene Vorrichtung dient dazu, die elektrische Leitung 1 in einer hier nicht dargestellten Wandöffnung eines Maschinengehäuses oder Schaltschranks oder Verteilerkastens zu befestigen. Dabei wird der Gewindeabschnitt 9 des Grundkörpers 2 durch die Wandöffnung hindurchgeführt bis der Außensechskant 10 des Grundkörpers 2 an der Wand anliegt. Der Gewindeabschnitt 9 wird unter Berücksichtigung des O-Ringes 8 mit einer hier nicht dargestellten Kontermutter auf der Seite verschraubt, die zum Innenraum eines Maschinengehäuses oder Schaltschranks oder Verteilerkastens oder dergleichen gehört.

Um einen Druckausgleich zwischen dem Innenraum und der Umgebung zu realisieren, umfasst die Vorrichtung eine Druckausgleichsöffnung 12, die durch eine radial zur Längsachse A der elektrischen Leitung 1 verlaufende Bohrung im Bereich des Außensechskants 10 erstellt ist. Damit nun kein Feuchtetransport stattfindet, ist die Druckausgleichsöffnung 12 mit einem semipermeablen Filter 11 verschlossen, der gasdurchlässig ist, aber Feststoffe und Flüssigkeiten filtert. Die Verschlussposition des Filters 11 ist in den Figuren 2, 4, 6, 8 gezeigt.

Die Vorrichtung zeichnet sich erfindungsgemäß dadurch aus, dass der Filter 11 die Druckausgleichsöffnung 12 an der Innenoberfläche des Grundkörpers 2 verschließt und mit dieser in Kontakt ist.

Die Figuren 2, 4, 6, 8 zeigen, dass im Bereich des Außensechskants 10 an der Innenoberfläche des Grundkörpers 2 die Druckausgleichsöffnungen 12 münden und dass über diesen der Filter 11 unmittelbar angeordnet ist. Die Verschlussfläche des Filters 11, die auf die Druckausgleichsöffnung 12 trifft, erstreckt sich koaxial zur Längsachse A der Leitung 1.

Das erste Ausführungsbeispiel gemäß den Fig. 1 und 2 befasst sich mit der Verwendung von Filtern 11 in Form eines hohlzylinderförmigen Filterelements 14, das geringfügig verformbar ist und dessen Außenquerschnitt auf die Geometrie des Grundkörpers 2 im Bereich der Druckausgleichsöffnung 12 abgestimmt ist. Der Außenquerschnitt der Filterelements 14 ist geringfügig größer als der Innenquerschnitt des Grundkörpers 2. Wenn das Filterelement 14 in den Grundkörper 2 eingeführt wird, ist es etwas zusammengepresst. Wenn das Filterelement 14 in den relevanten Bereich des Grundkörpers 2 gelangt, expandiert es ein wenig und liegt dicht an der Druckausgleichsöffnung 12 an.

Alle Filter 11 weisen eine ausreichend große Fläche auf, um die Druckausgleichsöffnung 12 zu überdecken und vollständig zu verschließen.

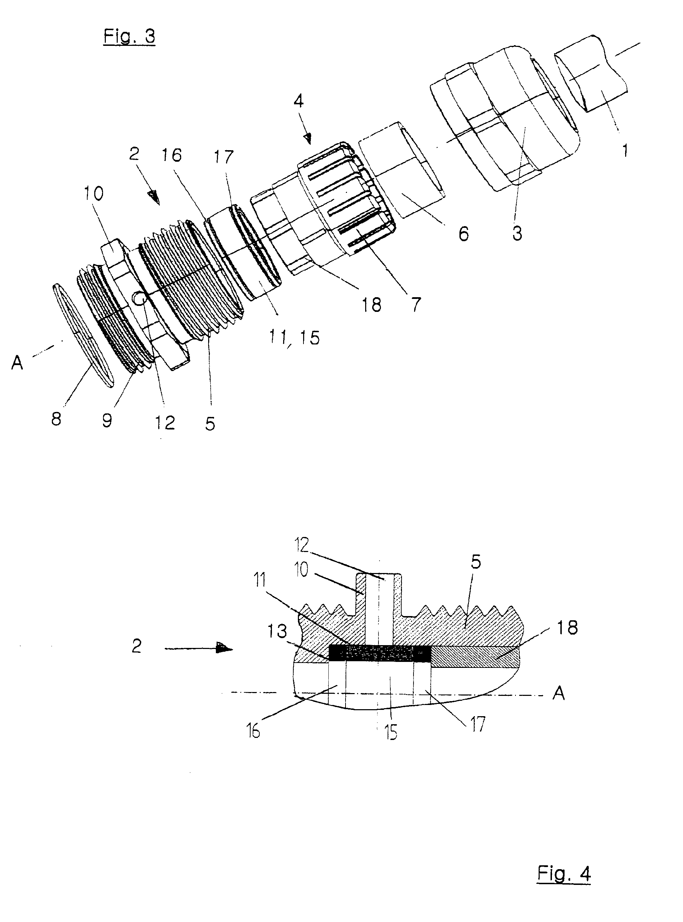

Das zweite Ausführungsbeispiel gemäß den Fig. 3 und 4 zeigt die Verwendung eines hohlzylindrischen Filterelements 15, das beidseitig mit zusätzlichen Dichtelementen 16, 17 konfektioniert ist. Der Außendurchmesser des Filterelementes 15 ist geringfügig kleiner als der Innendurchmesser des Grundkörpers 2. Hier ist eine Anlageschulter 13 im Grundkörper 2 enthalten, gegen die sich das Dichtelement 16 respektive das Filterelement 15 abstützt. An das Dichtelement 17 grenzt die Klemmeinrichtung 4 an.

Die Klemmeinrichtung 4 weist neben dem Lamellenabschnitt 7 generell einen Verbindungsabschnitt 18 auf, der im montierten Zustand in den Grundkörper 2 eingeführt ist, der im Hinblick auf das zweite Ausführungsbeispiel an das Dichtelement 17 des Filterelementes 15 angrenzt. Die Strömungsverbindung zum Innenraum eines hier nicht dargestellten Maschinengehäuses, in den der Gewindeabschnitt 9 des Grundkörpers 2 hineinragt, ist durch die Bohrung des Grundkörpers 2, durch die die elektrische Leitung 1 geführt wird, gewährleistet.

Das dritte Ausführungsbeispiel richtet sich auf einen Filter 11, der als hohlzylindrische Membran 19 ausgebildet ist. Wie die Filterelemente 14, 15 ist auch die Membran 19 im montierten Zustand an der Innenoberfläche des Grundkörpers 2 angeordnet.

Das vierte Ausführungsbeispiel richtet sich auf einen Filter 11, der als Membranelement 20 ausgebildet ist. Es werden drei Membranelemente 20 für drei Druckausgleichsöffnungen 12 im Abstand von 60° eingesetzt.

Sowohl die hohlzylindrische Membran 19 als auch die Membranelemente 20 sind geometrisch auf die Innengeometrie des Grundkörpers 2 abgestimmt und weisen eine ausreichende Fläche auf, um die Druckausgleichsöffnung zu überdecken.

Die hohlzylindrische Membran 19 und die Membranelemente 20 werden aber nicht wie die Filterelemente 14, 15 eingepresst oder eingelegt, sondern sind an der Innenoberfläche des Grundkörper 2 unter Verschluss der Druckausgleichsöffnung 12 angeklebt.

Beim dritten und vierten Ausführungsbeispiel ist der mit Längsrippen 21 versehene Verbindungsabschnitt 18 der Klemmeinrichtung 4 verlängert ausgebildet und reicht im montierten Zustand über die Membran 19 und die Membranelemente 20 hinaus. Über den Abstand zwischen der Außenoberfläche des Verbindungsabschnittes 18 und der Innenoberfläche des Grundkörpers 2 im Bereich des Gewindeabschnittes 9 ist zumindest im Bereich zwischen den Längsrippen 21 eine Strömungsverbindung zum Inneren des Maschinengehäuses oder Schaltschranks oder Verteilerkastens ausbildet.

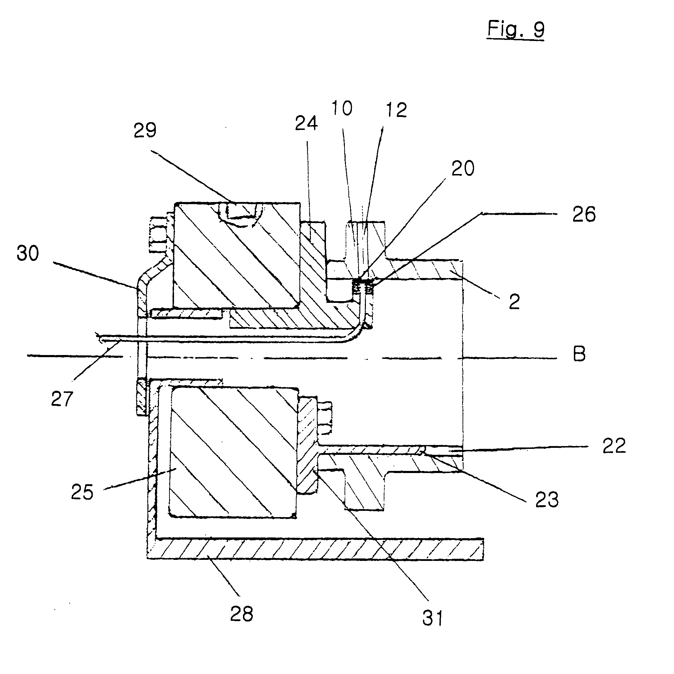

In Fig. 9 ist schematisch ein Werkzeug zur Herstellung einer Klebverbindung zwischen dem Membranelement 20 und dem Grundkörper 2 gezeigt. Das Werkzeug umfasst zwei grundsätzliche Bestandteile, nämlich eine Aufnahme 23 zur Positionierung des Grundkörpers 2 sowie eine Trageinrichtung 24 für das Membranelement 20. Das Membranelement 20 ist an seiner zur Innenoberfläche des Grundkörpers 2 weisenden Fläche mit einer Klebschicht versehen.

Die Trageinrichtung 24 ist an einem Backenfutter 25 angeordnet und lässt sich radial zur Längsachse B des Grundkörpers 2 und des Backenfutters 25 bewegen, so dass das Membranelement 20 unter Überdeckung der Druckausgleichsöffnung 12 in Anlage zur Innenoberfläche des Grundkörpers 2 in der Ausnehmung 13 gelangt und dort die Klebeverbindung stattfindet.

An der Trageinrichtung ist eine Gummiauflagefläche 26 für das Membranelement 20 vorgesehen, durch das hindurch eine Saugleitung 27 reicht, welches das Membranelement 20 bis zur Ausführung der Klebverbindung ansaugt.

Zum Werkzeug gehören noch ein Standfuß 28, eine Stellschraube 29 für das Backenfutter 25, ein Sicherungsblech 30 und ein Anschlag 31 für die Aufnahme 23.

Nachdem die Trageinrichtung 24 mit dem Membranelement 20 bestückt ist, wird der Grundkörper 2 auf die Aufnahme 23 aufgesteckt und bis zum Anschlag 31 geschoben. Die Aufnahme 23 und eine Längsnut 22 an der Innenoberfläche des Grundkörpers 2 im Gewindeabschnitt 9 wirken hierbei vorteilhaft zusammen.

Alle Bauteile sind so justiert, dass nun die Trageinrichtung 24 mittels Backenfutter 25 und Stellschraube 29 radial nach außen bewegt wird und das Membranelement 20 in die Ausnehmung 13 gelangt und an die Innenoberfläche des Grundkörpers 2 gepresst wird, so dass die Klebung stattfindet und die Druckausgleichsöffnung 12 verschlossen ist.

Auf diese Weise steht ein Grundkörper zur Verfügung, der mit herkömmlichen weiteren Bauteilen der Vorrichtung zusammenmontiert werden kann.

Hinsichtlich weiterer, in den Figuren nicht gezeigter Merkmale wird auf den allgemeinen Teil der Beschreibung verwiesen, wo auch die Vorteile der in den Figuren gezeigten Merkmale erörtert sind.

Abschließend sei darauf hingewiesen, dass die erfindungsgemäße Lehre nicht auf die voranstehend erörterten Ausführungsbeispiele eingeschränkt ist.

## Patentansprüche

1. Vorrichtung zur Befestigung einer Leitung (1) mit einem Grundkörper (2), einer Hutmutter (3), einer Klemmeinrichtung (4), wobei die Klemmeinrichtung (4) dem Grundkörper (2) zugeordnet ist und im Betriebszustand von der Hutmutter (3) übergriffen ist, wobei die Hutmutter (3) mit dem Grundkörper (2) eine lösbare Verbindung ausbildet und dabei auf die Klemmeinrichtung (4) derart einwirkt, dass die Leitung (1) gehalten ist und wobei der Grundkörper (2) mindestens eine zur Längsachse (A) der Leitung (1) abgewinkelte, insbesondere radiale, Druckausgleichsöffnung (12) aufweist, die mit einem Filter (11) verschlossen ist,
**dadurch gekennzeichnet,**
**dass** der Filter (11) die Druckausgleichsöffnung (12) an der Innenoberfläche des Grundkörpers (2) verschließt und mit dieser in Kontakt ist.

2. Vorrichtung nach Anspruch 1, **dadurch gekennzeichnet, dass** der Grundkörper (2) einen Außensechskant (10) aufweist, durch den hindurch die Druckausgleichsöffnung (12) in das Innere des Grundkörpers (2) öffnet.

3. Vorrichtung nach einem der Ansprüche 1 bis 3, **dadurch gekennzeichnet, dass** der Filter (11) als hohlzylinderförmiges Filterelement (14, 15) ausgebildet ist.

4. Vorrichtung nach Anspruch 3, **dadurch gekennzeichnet, dass** der Filter (11) mit der Innenoberfläche des Grundkörpers (2) kraft- und / oder formschlüssig verbunden ist.

5. Vorrichtung nach Anspruch 4, **dadurch gekennzeichnet, dass** die Außengeometrie des Filterelementes (14, 15) auf die Innengeometrie des Grundkörpers (2) im Bereich der Druckausgleichsöffnung (12) abgestimmt ist, wobei der Außenquerschnitt des Filterelements (14, 15) zumindest im montierten Zustand vorzugsweise geringfügig größer ist als der Innenquerschnitt des Grundkörpers (2), so dass das Filterelement (14, 15) gegen die Druckausgleichsöffnung (12) gepresst ist.

6. Vorrichtung nach einem der Ansprüche 3 bis 5, **dadurch gekennzeichnet, dass** das Filterelement (15) mit mindestens einem Dichtelement (16, 17) konfektioniert ist.

7. Vorrichtung einem der Ansprüche 1 bis 6, **dadurch gekennzeichnet, dass** die Klemmeinrichtung (4) einen Lamellenabschnitt (7) und einen Verbindungsabschnitt (18) aufweist und dass der Verbindungsabschnitt (18) im montierten Zustand an den Filter (11) angrenzt.

8. Vorrichtung Anspruch 1 oder 2, **dadurch gekennzeichnet, dass** der Filter (11) als hohlzylindrische Membran ausgebildet ist.

9. Vorrichtung Anspruch 1 oder 2, **dadurch gekennzeichnet, dass** der Filter (11) als Membranelement (20) ausgebildet ist.

10. Vorrichtung nach Anspruch 9, **dadurch gekennzeichnet, dass** drei bis sechs Druckausgleichsöffnungen (12) und drei bis sechs Membranelemente (20) vorgesehen sind.

11. Vorrichtung nach einem der Ansprüche 8 bis 10, **dadurch gekennzeichnet, dass** der Filter (11) mit der Innenoberfläche des Grundkörpers (2) stoffschlüssig verbunden ist, insbesondere verklebt, ist.

12. Vorrichtung nach einem der Ansprüche 8 bis 11, **dadurch gekennzeichnet, dass** die Klemmeinrichtung (4) einen Lamellenabschnitt (7) und einen Verbindungsabschnitt (18) aufweist und dass der Verbindungsabschnitt (18) im montierten Zustand über den Filter (11) hinausreicht.

13. Vorrichtung nach Anspruch 12, **dadurch gekennzeichnet, dass** die Klemmeinrichtung (4) am Verbindungsabschnitt (18) mindestens eine, sich parallel zur Längsachse (A) des Leitung (1) erstreckende Längsrippe (21) aufweist, wobei der Abstand zwischen Außenoberfläche und Rippe (21) des Verbindungsabschnittes (18) und Innenoberfläche des Grundkörpers (2) oder zumindest im Bereich zwischen zwei oder mehr Längsrippen (21) eine Strömungsverbindung zum Inneren des Maschinengehäuses oder Schaltschranks oder Verteilerkastens ausbildet.

14. Werkzeug zur Herstellung einer stoffschlüssigen Verbindung zwischen dem Filter (11) und dem Grundkörper (2) nach einem der Ansprüche 8 bis 13, **dadurch gekennzeichnet, dass** eine Aufnahme (23) zur Positionierung des Grundkörpers (2) sowie eine Trageinrichtung (24) für den Filter (11) vorgesehen sind, wobei die Trageinrichtung (24) so positionierbar ist, dass sie den Filter (11) unter Überdeckung der Druckausgleichsöffnung (12) in Anlage zur Innenoberfläche des Grundkörpers (2) bringt, so dass dort der Stoffschluss, insbesondere durch die Ausbildung einer Klebeverbindung infolge einer auf die Außenoberfläche des Filters (11) aufgebrachten Klebschicht, stattfindet.

15. Werkzeug nach Anspruch 16, **dadurch gekennzeichnet, dass** die vorzugsweise zur Sicherung des Filters (11) vor Aufbringen auf den Grundkörper (2) mit Unterdruck arbeitende, Trageinrichtung (24) parallel und/oder radial zur Längsachse (B) des Grundkörpers (2) bewegbar ist.

16. Grundkörper mit einer durch einen Filter (11) verschlossenen Druckausgleichsöffnung (12) für eine Vorrichtung zur Befestigung einer Leitung (1), die außerdem eine Klemmeinrichtung (4) zum Halten der Leitung (1) und eine den Grundkörper (2) übergreifende und auf die Klemmeinrichtung (4) einwirkende Hutmutter (3) umfasst, insbesondere für eine Vorrichtung nach einem der Ansprüche 1 bis 6, **dadurch gekennzeichnet, dass** der Filter (11) kraft- und / oder formschlüssig mit der Innenoberfläche des Grundkörpers (2) verbunden ist.

17. Grundkörper mit einer mit einer durch einen Filter (11) verschlossenen Druckausgleichsöffnung (12), für eine Vorrichtung zur Befestigung einer Leitung (1), die außerdem eine Klemmeinrichtung (4) zum Halten der Leitung (1) und eine den Grundkörper (2) übergreifende und auf die Klemmeinrichtung (4) einwirkende Hutmutter (3) umfasst, insbesondere für eine Vorrichtung nach einem der Ansprüche 1 bis 13, **dadurch gekennzeichnet, dass** der Filter (11) stoffschlüssig mit der Innenoberfläche des Grundkörpers (2) verbunden, insbesondere verklebt, ist.
